# FASCICULE DE BREVET EUROPEEN

(11) **EP 1 499 815 B1**
(45) Date de publication et mention de la délivrance du brevet: **23.11.2005**
(21) Numéro de dépôt: 03740607.1
(22) Date de dépôt: 14.04.2003
(51) Int. Cl.: F16D 65/18, B60T 8/00, B60T 13/74, F16D 65/14

(54) **FREIN A DISQUE MUNI D'AU MOINS UNE PLAQUETTE DE FREIN INCLINABLE**
SCHEIBENBREMSE MIT MINDESTENS EINEM NEIGBAREN BREMSBELAG
DISC BRAKE COMPRISING AT LEAST ONE INCLINABLE BRAKE PAD

(30) Priorité: 18.04.2002 FR 0204895
(43) Date de publication de la demande: 26.01.2005
(73) Titulaire: ROBERT BOSCH GMBH, 70442 Stuttgart (DE)
(72) Inventeur: BOISSEAU, Jean-Pierre, F-75014 Paris (FR)
(74) Mandataire: Hurwic, Aleksander Wiktor
(86) Numéro de dépôt international: PCT/FR2003/001186
(87) Numéro de publication internationale: WO 2003/087617

(56) Documents cités:
- DE-A- 10 046 177
- US-A- 5 573 314
- US-B1- 6 305 506

## Description

La présente invention se rapporte principalement à un dispositif de freinage pour véhicule automobile et à un système de freinage comportant un tel dispositif.

Les dispositifs de freinage pour véhicule automobile de type connu comportent un élément de friction appelée plaquette de frein susceptible de venir s'appliquer sous l'action d'un piston contre un disque de frein solidaire en rotation d'une roue du véhicule.
Le piston est en contact avec une face arrière de la plaquette de frein selon un plan sensiblement parallèle au plan du disque de frein.

Le piston est déplacé en direction du disque de frein par exemple au moyen d'un fluide hydraulique sous pression ou d'un moteur électrique.

Le document WO 98/14715 décrit un frein à disque électrique .comportant un moteur électrique déplaçant un piston en direction d'une plaquette de frein et appliquant la plaquette de frein contre un disque de frein lors d'une commande de freinage. Le plan d'appui entre le piston et la plaquette de frein formant un angle non nul avec le plan contenant le disque de frein selon un rayon du disque de frein, de manière à ce que l'inclinaison du plan d'appui soit orienté dans le sens de rotation du disque de frein lors d'une marche avant de véhicule automobile.

Ainsi lors d'une action de freinage, lorsque la plaquette de frein est appliquée contre le disque de frein, l'effort de freinage fourni par le moteur électrique est amplifié par un effet de coin subi par la plaquette entre le disque de frein et le piston offrant ainsi une assistance au freinage. L'effet de coin est dû à au couple exercé sur la plaquette par le disque du fait de la rotation du disque, la plaquette est alors serrée entre le disque et la face du piston en appui contre la face en biais de la plaquette
L'effet de coin bien connu dans le domaine des freins permet d'amplifier de manière très importante l'effort de freinage appliqué au piston, cependant ce phénomène risque d'entraîner le blocage de la roue préjudiciable à la stabilité du véhicule. De plus cette amplification n'est pas nécessaire pour des faibles niveaux de freinage, or dans le mode de réalisation décrit dans le document WO 98/14715, cette amplification est présente à chaque action de freinage.

Un autre frein électrique avec amplification par effet de coin est décrit dans le document DE 10046177. Le rapport d'amplification de ce frein est variable.

C'est par conséquent un but de la présenté invention d'offrir un dispositif de freinage efficace et sûr.

C'est également un but de la présente invention d'offrir un dispositif de freinage permettant une amplification maîtrisée et variable, en particulier continûment variable de l'effort de freinage fourni par la commande du freinage.

C'est également un but de la présente invention d'offrir un dispositif de freinage pouvant s'adapter à tous les systèmes de freinage existants sans nécessiter d'aménagement particulier de ceux-ci et de permettre la mise en oeuvre des fonctions de contrôle du comportement du véhicule au moyen du système de freinage.

Ces buts sont atteints par un dispositif de freinage comportant, un premier élément de friction susceptible d'être appliqué contre un second élément solidaire en rotation de la roue du véhicule par appui d'un troisième élément contre le premier élément, ledit dispositif comportant également un moyen d'amplification de l'effort de freinage exercé par le troisième élément sur le premier élément utilisant l'effet de coin, ledit amplificateur fournissant un rapport d'amplification variable.

En d'autres termes, l'amplificateur d'effort de freinage fonctionne par le coincement maîtrisé et modifiable de la plaquette de frein entre le disque de frein et le piston du fait du couple subi par la plaquette venant en contact du disque de frein en rotation, la maîtrise du coincement s'effectue en faisant varier l'angle d'inclinaison du plan d'appui entre le piston et la plaquette relativement au plan contenant le disque de frein.

On entend par amplification, l'utilisation de l'énergie cinétique du véhicule pour le freiner.

La présente invention a principalement pour objet un dispositif de freinage pour véhicule automobile comportant un premier élément de friction susceptible de venir s'appliquer par une première face sur une première face d'un second élément solidaire d'une roue du véhicule automobile afin de ralentir celui-ci, un troisième élément d'application d'un effort de freinage en appui par une première extrémité sur une seconde face du premier élément de friction opposée à la première face du premier élément de friction et susceptible d'appliquer le premier élément de friction sur le second élément caractérisé en ce que le dispositif comporte également un moyen amplificateur pivotant pour modifier l'orientation d'un plan inclinable contenant l'appui entre le premier élément de friction et le troisième élément d'application relativement à un plan contenant la première face du second élément.

La présente invention a également pour objet un dispositif de freinage caractérisé en ce que le moyen amplificateur permet de modifier continûment l'inclinaison du plan contenant l'appui entre le premier élément de friction et le troisième élément d'application relativement au plan contenant la première face du second élément.

La présente invention a également pour objet un dispositif caractérisé en ce que le premier moyen est une plaquette de frein comportant un support rigide portant la seconde face et une garniture muni de la première face susceptible de venir en contact avec une première face du disque de frein et en ce que le troisième élément comporte un piston muni de la première face en contact avec la seconde face du support rigide par l'intermédiaire du moyen amplificateur et un générateur susceptible d'appliquer un effort de freinage au piston.

La présente invention à également pour objet un dispositif caractérisé en ce que le générateur d'effort de freinage est un maître-cylindre.

La présente invention à également pour objet un dispositif caractérisé en ce que le générateur d'effort de freinage est un moteur électrique.

La présente invention à également pour objet un dispositif caractérisé en ce que le générateur d'effort de freinage est une pompe hydraulique.

La présente invention à également pour objet un dispositif caractérisé en ce que le moyen amplificateur comporte une première pièce mobile en rotation dans le piston du côté de la première extrémité du piston, une seconde pièce mobile en rotation dans le premier élément de friction du côté de la seconde face du premier élément de friction, en ce que la première et la seconde pièces sont en appui respectivement par une première et une seconde faces planes, lesdites faces étant parallèles au plan inclinable.

La présente invention a également pour objet un dispositif caractérisé en ce que la première pièce a sensiblement la forme d'un demi cylindre disposé dans une cavité demi cylindrique solidaire du piston et en ce que la seconde pièce a sensiblement la forme d'un demi cylindre disposé dans une cavité demi cylindrique solidaire du premier élément de friction.

La présente invention à également pour objet un dispositif caractérisé en ce que la première pièce a sensiblement la forme d'une demi sphère disposée dans une cavité demi sphérique solidaire du piston et en ce que la seconde pièce a sensiblement la forme d'une demi sphère disposée dans une cavité demi sphérique solidaire du premier élément de friction

La présente invention a également pour objet un dispositif caractérisé en ce que le moyen amplificateur comporte également des moyens pour réduire le frottement entre la première, la seconde pièces, et respectivement la première et la seconde cavités , et également entre les première et seconde faces des première et seconde pièces.

La présente invention a également pour objet un dispositif caractérisé en ce que les moyens pour réduire le frottement sont des roulements à billes.

La présente invention a également pour objet un dispositif caractérisé en ce que le moyen amplificateur est activé par un moteur électrique.

La présente invention a également pour objet un dispositif caractérisé en ce qu'il comporte également un mécanisme de frein de parc coopérant avec le moyen amplificateur de manière à ce que le plan inclinable soit incliné dans le sens de la pente sur laquelle le véhicule automobile est stationné.

La présente invention a également pour objet un dispositif caractérisé en ce qu'il comporte un moyen supplémentaire d'application d'un effort de freinage sur le premier élément de friction.

La présente invention a également pour objet un dispositif caractérisé en ce que le moyen supplémentaire est un moyen élastique exerçant un effort sur le piston de manière à appliquer le premier élément de friction sur le second élément en cas de défaillance générateur.

La présente invention a également pour objet un dispositif caractérisé en ce que le moyen amplificateur permet également l'application du premier élément de friction sur le second élément.

La présente invention a également pour objet un dispositif caractérisé en ce que l'ensemble formé par les première et seconde parties forment un excentrique d'axe de rotation Y'.

La présente invention a également pour objet un dispositif caractérisé en ce que l'ensemble formé par les première et seconde parties a une section sensiblement ellipsoïdale.

La présente invention a également pour objet un système de freinage comportant un calculateur électronique , une commande de freinage actionnable par un conducteur, des moyens de détection d'un actionnement de ladite commande de freinage, des moyens de détection de la vitesse d'au moins une roue caractérisé en ce qu'il comporte également au moins un dispositif de freinage selon la présente invention appliqué à ladite roue, le moyen amplificateur étant commandé par le calculateur électronique.

La présente invention a également pour objet un système caractérisé en ce que le moyen amplificateur du dispositif est activé en cas de détection d'un actionnement de la commande de freinage correspondant à un niveau de décélération supérieure à une valeur prédéterminée.

La présente invention a également pour objet un système caractérisé en ce que le moyen amplificateur est actionné pour une valeur de décélération à atteindre supérieure à une valeur prédéterminée.

La présente invention a également pour objet un système caractérisé en ce que le moyen est activé en cas de détection d'une nécessité de décélérer ladite roue.

La présente invention a pour avantage de permettre l'utilisation d'éléments de freinage de dimensions réduites qui seront compensées par l'effet de coin maîtrisé entre le disque de frein et la plaquette de frein.

La présente invention sera mieux comprise à l'aide de la description qui va suivre et des figures annexées, sur lesquelles :
La figure 1 est une vue de dessus d'un mode de réalisation d'un dispositif de freinage selon la présente invention ;
La figure 2 est une vue schématique en coupe longitudinale d'une première variante d'un dispositif selon la présente invention dans un premier mode de fonctionnement ;
La figure 3 est une vue schématique en coupe longitudinale de la première variante d'un dispositif selon la présente invention dans un secondr mode de fonctionnement ;
La figure 4 est un diagramme représentant un premier exemple de freinage mettant en oeuvre un dispositif de freinage selon la présente invention ;
La figure 5 est un diagramme représentant un deuxième exemple de freinage mettant en oeuvre un dispositif de freinage selon la présente invention ;
La figure 6 est un diagramme représentant un troisième exemple de freinage mettant en oeuvre un dispositif de freinage selon la présente invention ;
La figure 7 est une vue schématique en coupe longitudinale d'une seconde variante de réalisation d'un dispositif selon la présente invention;
La figure 8 est une vue schématique en coupe longitudinale d'une troisième variante de réalisation d'un dispositif selon la présente invention;

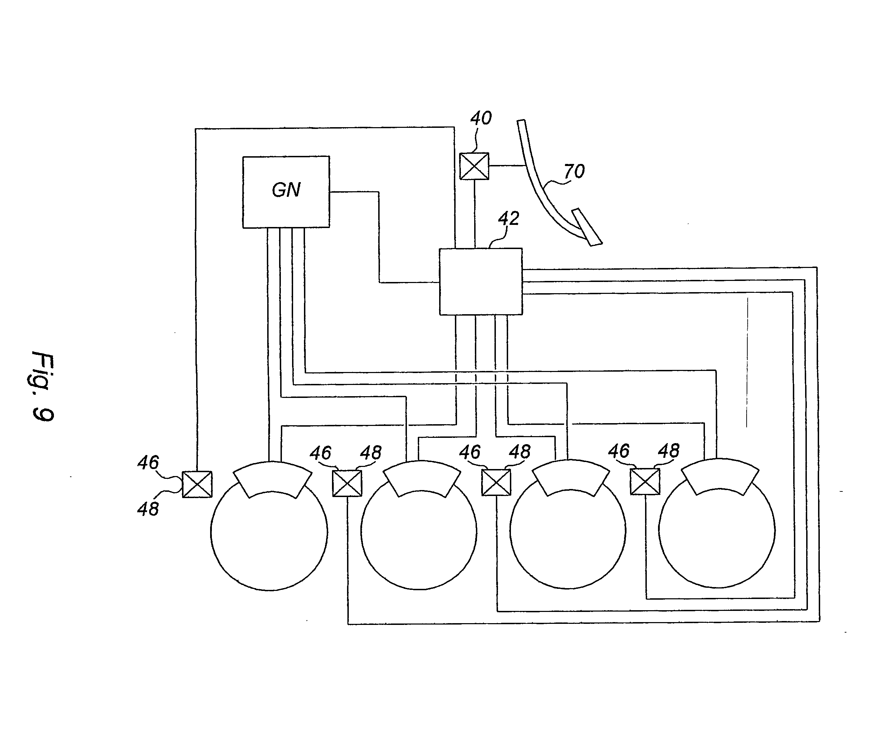

La figure 9 est un schéma d'un système de freinage selon la présente invention.

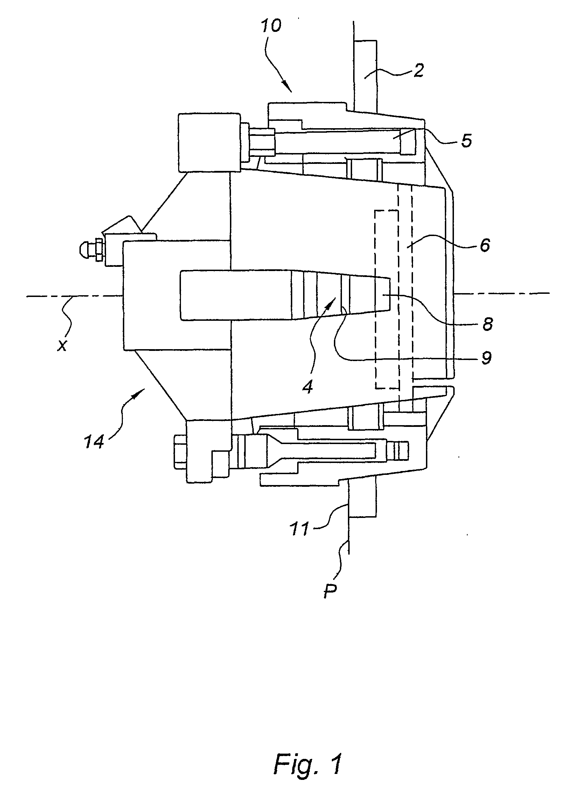

Sur la figure 1, on peut voir un dispositif selon la présente invention comportant un premier élément 4 ou plaquette de frein muni d'une première face 9 d'application contre un second élément 2 ou disque de frein solidaire en rotation d'une roue (non représentée) d'un véhicule automobile susceptible d'être entraîné en rotation dans un sens A ou un sens B autour d'un axe Z. La plaquette est munie d'une deuxième face opposée à la première face, typiquement mais non limitativement les deux faces sont parallèles.

La deuxième face est portée par un support rigide 6, par exemple en tôle d'acier et la première face 9 d'application est portée par un élément de friction 8 de coefficient de friction µ ou garniture fixée sur le support 6 par collage et susceptible de venir en contact avec une face 11 du disque de frein 2 lors d'une action de freinage et ainsi de ralentir la vitesse de rotation de celui-ci. La face 9 de la garniture 8 susceptible de venir en contact avec la face 11 du disque est contenu dans un plan P.

La plaquette est montée à coulissement selon un axe X perpendiculaire au plan P dans une chape 10 solidaire d'un porte moyeu du véhicule.

Il est envisageable de la même manière de prévoir une plaquette coulissant dans un étrier de frein.

De manière avantageuse, le dispositif comporte deux plaquettes de frein de part et d'autre du disque de frein dans deux plans sensiblement parallèles et susceptible de s'appliquer chacune sur une face opposée du disque de frein lors d'une phase de freinage.

Le dispositif de freinage selon la figure 1 comporte également un étrier 14 mobile relativement à la chape 10, dit « étrier flottant » et monté à coulissement autour de la chape par des colonnettes 16.

Il est bien entendu que le dispositif de freinage selon la présente invention n'est pas limité à un dispositif comportant un étrier coulissant par rapport à une chape mais à tout dispositif de freinage permettant d'appliquer au moins une plaquette de frein contre un disque de frein.

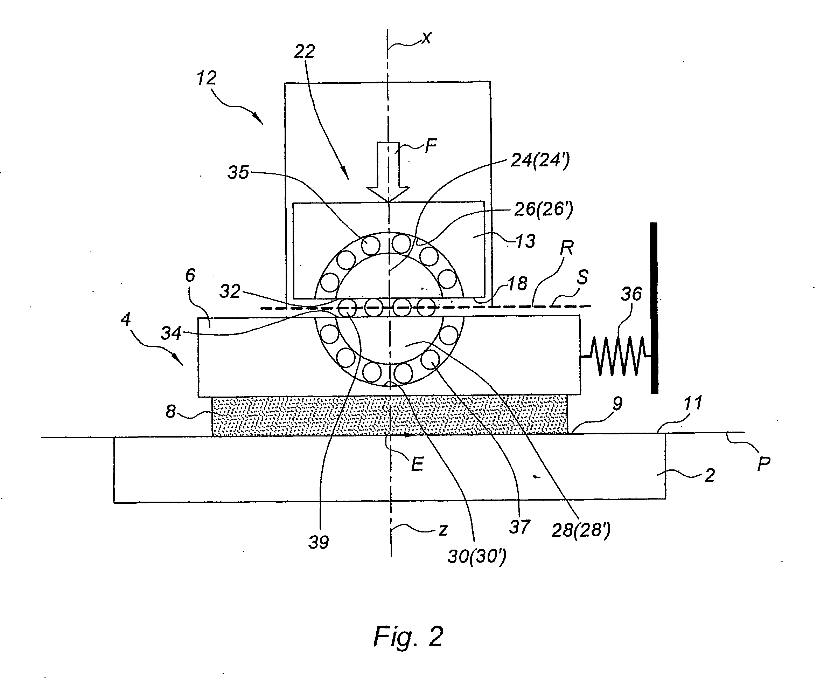

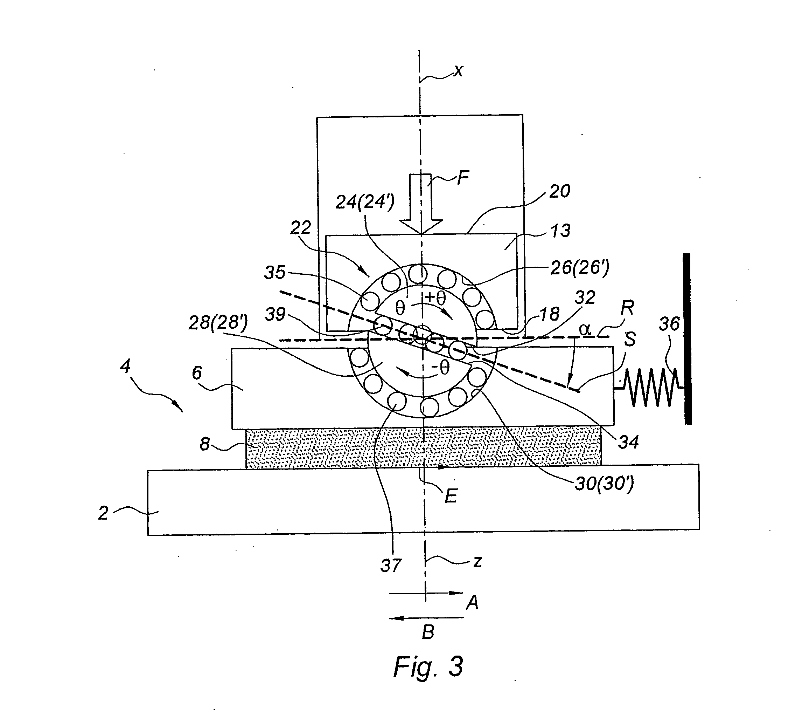

Sur les figures 2 et 3, on peut voir le dispositif selon la présente invention comportant également un troisième élément 12 d'application d'un effort de freinage sur la plaquette de manière à appliquer la plaquette de frein sur le disque de frein.

Le troisième moyen 12 d'application de l'effort de freinage comporte une pièce, appelé piston 13 transmettant l'effort de freinage et un générateur GN d'un effort de freinage.
Le piston 13 de frein est monté à coulissement dans l'étrier 14 monté coulissant selon l'axe X au moyen des colonnettes 16.

Le piston 13 est de forme sensiblement cylindrique et est en appui par une première extrémité 18 longitudinale selon l'axe X contre le support rigide 6 dans un plan R. Sur la figure 2, le plan R est parallèle aux plans P, sur la figure 3 l'appui du piston contre le support rigide 6 s'effectue dans un plan S formant un angle α avec le plan R selon un axe Y perpendiculaire au plan de coupe des figures 2 et 3.

Le piston 13 est soumis par une seconde extrémité longitudinale 20 à un effort de freinage EF exercé par le générateur GN permettant au piston 13 d'appliquer la plaquette 4 sur le disque de frein 2.

Le générateur GN de l'effort de freinage est par exemple une pompe hydraulique et commandée par un calculateur électronique ou un maître-cylindre actionné par une pédale 70 de frein déplacée par le conducteur du véhicule automobile, envoyant un fluide hydraulique sous pression dans le dispositif de freinage ou également par exemple un ensemble moteur électrique M1 rotatif et dispositif vis-écrou permettant un déplacement axial selon l'axe X du piston en direction du disque de frein lors du fonctionnement du moteur électrique.

L'appui du piston 13 sur la plaquette 6 est réalisé par l'intermédiaire d'un moyen amplificateur 22 comportant une première partie 24 solidaire du piston 13 et une seconde partie 28 solidaire de la plaquette de frein 6, la première partie étant en appui sur la seconde partie suivant le plan S, ledit plan S étant mobile en rotation d'un angle α selon l'axe Y dans une première ou une seconde direction +θ,-θ ,par exemple par un moteur électrique M2 commandé par le calculateur électronique.

Dans le mode de réalisation représenté aux figures 2 et 3, la première partie 24 a la forme d'un demi cylindre ou une demi sphère 24' monté pivotant autour de l'axe Y dans une cavité demi cylindrique 26. ou demi sphérique 26' correspondante pratiquée dans le piston 13 par la première extrémité 18. Un roulement 35, par exemple à billes, est avantageusement interposé entre la première partie 24 et la cavité 26 du piston.

La seconde partie 28 a également la forme d'un demi cylindre (ou une demi sphère 28') monté pivotant autour de l'axe Y dans une cavité 30 demi cylindrique (ou demi sphérique 30') correspondante pratiquée dans un élément (non représenté) solidaire de la plaquette 6. Un roulement, par exemple à billes 37, est avantageusement interposé entre la seconde partie 28 et la cavité 30 du piston.

L'élément solidaire de la plaquette est avantageusement disposé dans une cavité prévue dans le support rigide de la plaquette de frein, ce qui permet lors du changement de la plaquette de frein de ne pas devoir remplacer le moyen amplificateur 22.

Il est bien entendu que l'on peut également prévoir une cavité 26 pratiquée dans un élément rapporté sur la face 18 du piston.

Il est cependant bien entendu que l'on pourrait prévoir une plaquette muni d'un support rigide dans laquelle serait directement monté à rotation la deuxième partie 28 du moyen amplificateur 22.

Les premier et second demi cylindres 24,28 (respectivement les premier et seconde demi sphères 24',28') comportent respectivement une extrémité plane 32,34 par lesquelles elles sont montées à glissement l'un par rapport à l'autre dans le plan inclinable S.
Dans le mode de réalisation représenté un roulement à billes ou à rouleaux 39 est interposé entre les extrémités planes 32,34.

Les extrémités planes 32,34 sont parallèles au plan R lorsque le moyen amplificateur 22 n'est pas activé.

α est avantageusement compris entre 0° et 5° de manière préféré entre 0° et 4°.

Il est bien entendu que la mise en oeuvre de tout autre moyen permettant de faciliter le mouvement des demi cylindre 24,28 (respectivement des demi sphères 24',28') l'une par rapport à l'autre, ainsi que leur mouvement de rotation respectivement dans les cavités 26, 30 (respectivement les cavités 26',30') ne sort pas du cadre de la présente invention, par exemple en employant des matériaux auto-lubrifiants pour réaliser le moyen amplificateur 22.

La présente invention s'applique également à un dispositif de freinage peut comporter un étrier fixe dans lequel est monté à coulissement deux pistons de part et d'autre du disque de frein et susceptible lors d'une phase de freinage de venir appliquer chacune des plaquettes contre les faces opposées du disque de réaction

Désormais nous ne considérerons qu'un dispositif à un seul piston, mais il est bien entendu que la présente invention se rapporte également aux dispositifs de freinage à deux pistons ou plus.

La chape dans laquelle la plaquette coulisse selon l'axe X a une élasticité structurelle symbolisée sur les figures 2 et 3 par un ressort 36 de raideur K1.

Nous allons maintenant expliquer le fonctionnement du dispositif de freinage selon la présente invention :

Selon le mode de fonctionnement représenté sur la figure 2, le dispositif de freinage fonctionne comme un dispositif de type classique. Le plan S auquel sont parallèles les extrémités planes 32,34 et le plan R sont confondus, par conséquent le plan S est parallèle au plan Q du disque de frein.

Lorsqu'un effort de freinage EF est fourni par le générateur GN sur la seconde extrémité 20 du piston 13, celui-ci coulisse selon l'axe X selon la direction de la flèche F et entraîne en translation la plaquette de frein qui entre en contact avec la surface du disque de frein entraîné en rotation autour l'axe Z dans la direction A. Du fait du mouvement de rotation du disque de frein, la plaquette subit un couple E dans la direction A du fait de la déformation élastique de la chape. En particulier, l'extrémité plane 34 de la seconde demi sphère 30 glisse (ou roule) relativement à l'extrémité plane 32 de la première demi sphère.

La plaquette 6 en contact avec le disque de frein, se déplace sensiblement latéralement dans un plan parallèle au plan du disque de frein 2 sous l'action de le couple E et par la déformation élastique de la chape.

Selon le mode de fonctionnement représenté sur la figure 3, les demi cylindres (respectivement les demi sphères) ont tourné selon l'axe Y dans la direction +θ, le plan S forme alors un angle α par rapport au plan R selon l'axe Y. Le disque de frein est en rotation dans le sens A

Lorsqu'un effort de freinage EF fourni par le générateur GN est exercé sur le piston 13 qui se déplace selon l'axe X entraînant la plaquette 6. La plaquette 6 vient s'appliquer sur le disque de frein et est entraîné dans la direction A par le couple E. La plaquette 4 se déplace alors latéralement dans un plan parallèle au plan du disque dans la direction A, en particulier, l'extrémité plane 34 de le second demi cylindre 30 (respectivement de la seconde demi sphère) glisse relativement à l'extrémité plane 32 du premier demi cylindre (respectivement la première demi sphère) . Or du fait de l'inclinaison du plan S relativement au plan du disque de frein, la plaquette 4 se retrouve « coincée » entre le disque et le piston, l'effort de freinage EF est alors amplifié proportionnellement à l'angle α.

Le dispositif de freinage selon la présente invention coopère avanatgeusement avec des moyens de mesure de différents paramètres tels que par exemple la déformation DF de la chape et/ou la vitesse de la roue et/ou le déplacement d'une pédale de frein provoquant l'application d'un effort de freinage sur le piston.

La mesure de la déformation DF de la chape permet de quantifier l'effet de coin et ainsi de pouvoir réguler celui-ci en modifiant l'angle α.

La mesure du déplacement de la pédale de frein et en particulier de la vitesse de déplacement de celle-ci ou la mesure de la force appliquée sur la pédale de frein permet de déterminer si le freinage souhaité par le conducteur correspond à un freinage de forte intensité, à un freinage d'urgence et ainsi d'amplifier l'effort de freinage fourni par le générateur par exemple par le conducteur par l'intermédiaire d'un maître-cylindre ou par une pompe hydraulique dans le cas d'un système de freinage éléctrohydraulique en faisant varier l'angle α.

Puisque 80% environ des actions de freinage correspondent à une décélération inférieure à 0,3G, seuil en dessous duquel une assistance au freinage n'est pas nécessaire, on peut envisager avantageusement que le moyen amplificateur 22 ne soit activé que pour une décélération souhaitée supérieure à 0,3G par exemple.

Le dispositif de freinage selon la présente invention permet également de modifier le rapport d'amplification de l'effort de freinage exercé sur le piston dans une phase de régulation par un système de contrôle dynamique de trajectoire du véhicule par exemple dans le cas d'un blocage d'une roue ou d'une perte d'adhérence.

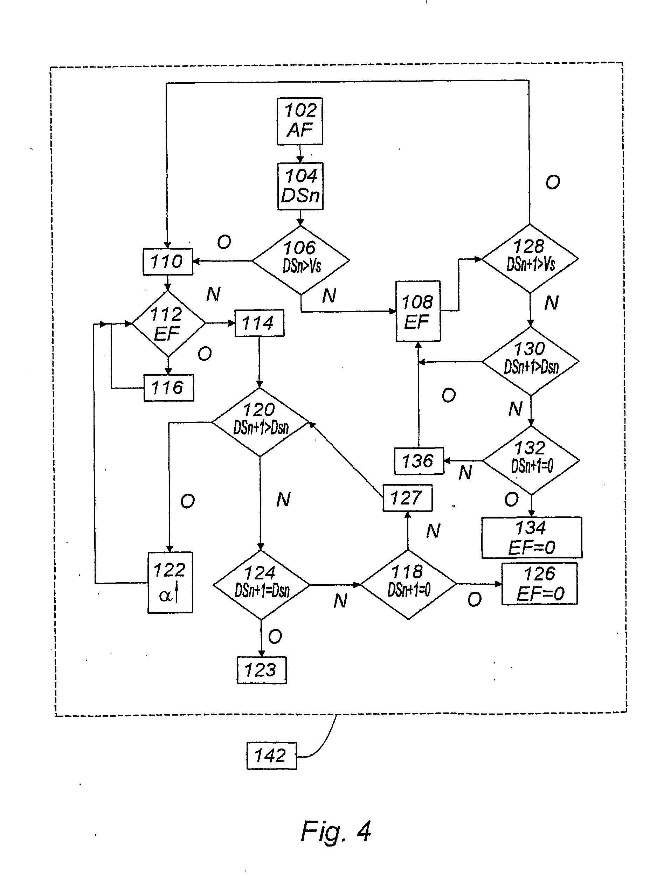

Sur la figure 4, on peut voir un premier exemple d'un diagramme représentant les différentes étapes d'une action de freinage mettant en oeuvre un système de freinage selon la présente invention. Le système de freinage est par exemple un système de freinage électro-hydraulique ou entièrement électrique. Dans le cas d'un système de freinage électro-hydraulique, un maître-cylindre simule en fonctionnement normal la réaction du circuit de freinage à la pédale de frein, l'effort de freinage appliqué sur le piston est exercé par du liquide de frein envoyé par une pompe électro-hydraulique commandée par un calculateur électronique suite à la détection du déplacement de la pédale de frein.

Dans le cas d'un système de freinage électrique, un moteur électrique M1 d'application applique par l'intermédiaire par exemple d'un ensemble vis-écrou un effort de freinage au piston, le moteur d'application M1 étant commandé par un calculateur électronique suite à la détection du déplacement de la pédale de frein.

Dans la suite de la description, lorsque nous parlerons d'effort de freinage EF sans autre précision, il s'agira d'un effort exercé par un fluide hydraulique, pneumatique ou par un moteur électrique.

A l'étape 102, une action de freinage AF est détectée par exemple par un capteur de course 40 disposé au niveau de la pédale de frein, en 104 l'information est envoyée à un calculateur électronique 42 qui détermine la valeur DS de décélération souhaitée par le conducteur.

A l'étape 106, le calculateur compare la valeur de décélération DSn à une valeur seuil Vs.

Il est envisageable de prévoir une valeur de Vs déterminée et non modifiable ou une valeur de Vs modifiée par le calculateur électronique suivant les conditions de circulation.

Pour la suite de la description, la référence DSn désignera la première valeur de DS mesurée et la référence DSn+1 la valeur DS suivante.

Si DSn est inférieur à Vs, à l'étape 108, le calculateur génère un ordre au générateur GN d'effort d'exercer un effort de freinage EF sur le piston.

A l'étape 128, le calculateur vérifie l'évolution de DS, en mesurant DSn+1.

Si DSn+1 est inférieur à Vs, on va à l'étape 130.

A l'étape 130, le calculateur compare DSn+1 à DSn.

Si DSn+1 est inférieur à DSn, à l'étape 132, le calculateur vérifie si DSn+1 est nul.

Si DSn+1 est nul, à l'étape 134 le calculateur génère l'ordre au générateur GN de pression d'annuler l'effort de freinage EF.

Si DSn+1 n'est pas nul, à l'étape 136, le calculateur génère l'ordre de modifier EF afin d'adapter le freinage au niveau de décélération souhaité DSn+1, puis on retourne à l'étape 108.

Si DSn+1 est supérieur à DSn, on va en 108.

Si DSn+1 est supérieure à Vs, on va en 110.

La description suivante fait intervenir DSn mais s'applique également à DSn+1 provenant de l'étape 128.

Si DSn est supérieur à Vs, on va à l'étape 110.

A l'étape 110, le calculateur génère un ordre au générateur GN d'effort d'exercer un effort de freinage EF sur le piston et au moyen amplificateur 22 de faire pivoter le plan S autour de l'axe Y d'un angle α déterminé à l'aide de modèles entrés dans la mémoire du calculateur 42.

A l'étape 112, des moyens de détection de la stabilité de la roue, par exemple un capteur de déformation 46 de la chape et/ou un capteur de vitesse de la roue 48 transmettent leurs mesures au calculateur 42 qui détermine s'il y a un risque de blocage des roues, les capteurs 46 et 48 sont avantageusement associés afin de pouvoir corréler leurs mesures.

Si aucun risque de blocage n'est détecté, à l'étape 116 le calculateur commande au moteur électrique de réduire l'angle α et si la diminution de l'angle de coincement α n'est pas suffisant, le calculateur commande au générateur GN de réduire l'effort de freinage sur le piston 13. Ceci s'effectue en plusieurs étapes de vérification du risque de blocage des roues et de modifications de l'angle α.

S'il n'y a pas de risque de blocage, le freinage est maintenu à l'étape 114.

A l'étape 120, le calculateur détermine une nouvelle valeur de DS, DSn+1 avec les moyens de détection disposés à la pédale de frein et.compare DSn+1 à DSn.

Si DSn+1 est supérieur à DSn, à l'étape 122 le calculateur commande au moyen 22 d'augmenter l'angle α, le risque de blocage de la roue est vérifié simultanément à l'étape 112.

Si DSn+1 est inférieur à DSn, à l'étape 124 le calculateur vérifie si DSn+1 est égal à DSn.

Si DSn+1 est égal à DSn, à l'étape 123 le calculateur génère l'ordre au moyen 22 de conserver l'angle α.

Si DSn+1 est différent de DSn, en 118 le calculateur vérifie si DSn+1 est nul.

Si DSn+1 est nul, à l'étape 126 le calculateur génère l'ordre au moyen 22 d'annuler α et au générateur GN d'annuler l'effort de freinage EF.

Si DSn+1 n'est pas nul, à l'étape 127 le calculateur génère l'ordre au moyen 22 de modifier α, puis on va à l'étape 120.

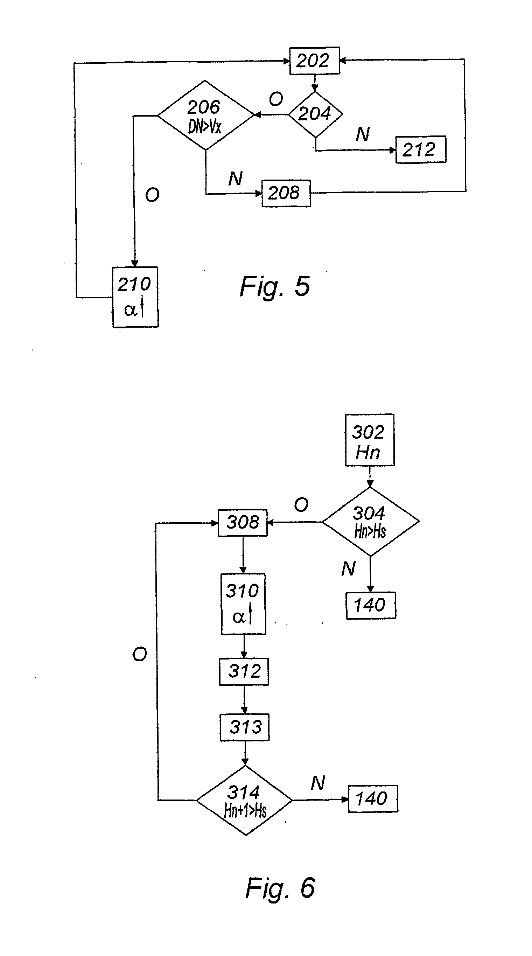

Sur la figure 5, on peut voir diagramme correspondant à un fonctionnement du système de freinage sans détection d'une action sur la pédale de frein et ceci dans le cas d'une détection par exemple par des moyens disposés au niveau des roues et/ou sur la carrosserie du véhicule automobile d'une nécessité de ralentir au moins une roue, par exemple dans le cas d'un manque d'adhérence de la roue ou en cas de détection d'un obstacle impliquant la nécessité de ralentir le véhicule afin d'éviter un choc entre le véhicule et les obstacles.

Nous appellerons alors la valeur de décélération détectée la valeur de décélération nécessaire DN pour corriger la trajectoire du véhicule.

A l'étape 202, différents paramètres sont mesurés par exemple la vitesse de rotation des roues, la trajectoire prévue du véhicule en fonction de la position du volant de direction et les distances auxquelles se trouvent les obstacles entourant le véhicule et transmis au calculateur.

A l'étape 204, le calculateur détermine si une ou plusieurs roues doivent être ralenties.

Si aucune roue ne doit être ralentie, la phase de freinage se termine en 212.

A l'étape 206, le calculateur détermine le niveau de décélération nécessaire DN.

Si DN est inférieure à une valeur de décélération prédéterminée Vx, le calculateur génère à l'étape 208 un ordre à un générateur GN d'appliquer un effort de freinage au piston, puis on va à l'étape 202 pour vérifier si la situation est à nouveau normale.

Si DN est supérieur à Vx, le calculateur génère à l'étape 210 un ordre au générateur d'appliquer un effort de freinage au piston 13 et au moyen amplificateur 22 d'augmenter l'angle α en faisant pivoter le plan S, plus précisément les première et seconde parties 24,28 mobiles en rotation dans les cavités 26,30.

Puis on revient à l'étape 202 pour contrôler l'effet des actions de freinage et si nécessaire à nouveau provoquer le ralentissement d'une ou plusieurs roues.

Sur la figure 6, on peut voir un diagramme de fonctionnement d'un système de freinage hydraulique classique pour lequel, l'appui sur la pédale provoque l'envoi de liquide de frein sous pression du maître-cylindre aux dispositifs de freinage placés au niveau des roues, la situation décrite correspond à une situation de freinage d'urgence.

A l'étape 302, la vitesse de déplacement de la pédale de frein et/ou l'effort appliqué à la pédale de frein H est mesurée Hn.

A l'étape 304, le calculateur compare la ou les valeurs H à des valeurs prédéterminés Hs.

Si Hn est inférieure à Hs, il s'agit d'une action de freinage classique, le diagramme 140 s'applique alors(diagramme représenté en figure 4).

Si Hn est supérieure à Hs, cette action de freinage est alors traitée comme un freinage d'urgence, le calculateur génère l'ordre de fermer des électrovannes interrompant la communication entre le maître-cylindre et les dispositifs de freinage, ce qui correspond à l'étape 308.

A l'étape 310, le calculateur génère l'ordre au moyen amplificateur 22 d'augmenter l'angle α.

A l'étape 312, les paramètres permettant d'évaluer la stabilité de la roue équipée du frein et par conséquent la stabilité du véhicule automobile par exemple les paramètres de vitesse de rotation des roues, de déformation de la chape sont mesurées et on vérifie le risque de blocage des roues à l'étape 313,, cette étape est équivalente à l'étape 112 du diagramme de la figure 4.

A l'étape 314, le calculateur compare une nouvelle valeur de H, Hn+1 et compare Hn+1 à Hn.
Si Hn+1 est inférieur à Hs, c'est l'étape 140 qui s'applique (voir figure 4).

Sinon , c'est l'étape 308 qui s'applique.

On peut cependant prévoir qu'il n'y ait pas d'électrovannes séparant le maître-cylindre des dispositifs de freinage et que le calculateur gère également les effets des actions de freinage du conducteur sur le freinage du véhicule.

Il est bien entendu que les diagrammes de fonctionnement représentés aux figures 4, 5 et 6 ne sont donnés qu'à titre d'exemples et ne sont nullement limitatif. De plus ils sont susceptibles de s'appliquer simultanément et qu'ils seront dans ce cas modifiés pour permettre une bonne coopération entre eux sans que les différentes actions n'interférent les unes sur les autres.

Il est bien entendu que les exemples de diagrammes de fonctionnement ne sont pas limitatifs et que l'homme du métier est à même de les modifier et de les adapter afin de pouvoir résoudre des problèmes pour lesquelles le dispositif de freinage selon la présente invention participe à leur résolution.

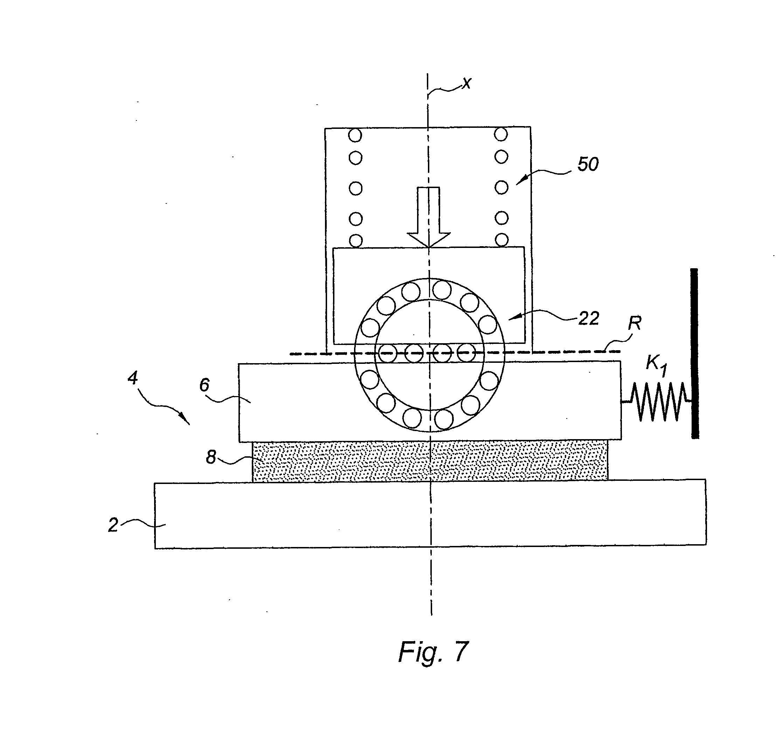

Sur la figure 7, on peut voir un deuxième mode de réalisation pour lequel le moyen amplificateur 22 permet également d'améliorer la sécurité de fonctionnement d'un dispositif de freinage électrique.

Le dispositif comporte un générateur GN d'effort de freinage formé par exemple par un moteur M1 appliquant un effort de freinage au piston 13 lors d'une phase de freinage afin d'appliquer au moins une plaquette de frein contre le disque de frein.
Le moyen amplificateur 22 est interposé entre le piston et la plaquette.
Le dispositif de freinage comporte également un moyen d'application supplémentaire 50 de la plaquette de frein sur le disque en cas de défaillance du générateur GN ou M1.
Le moyen d'application comporte par exemple un moyen élastique, par exemple un ressort disposé entre le piston et un élément fixe en amont du piston le long de l'axe X.

En cas de défaillance du moteur M1, le ressort 50 est libéré et applique au moins une plaquette de frein contre le disque de frein. Le moyen amplificateur 22 et en particulier le moteur M2 déplace en rotation les demi cylindres (respectivement les demi sphères) de manière à amplifier la force de freinage appliquée par le ressort.

Il est également envisageable de prévoir que le moyen d'application supplémentaire 50 applique un effort de freinage faible mais permanent, permettant ce qu'on appelle couramment le « léchage » du disque par la plaquette. Il est bien entendu que cela n'est possible que si ce couple résiduel ne perturbe pas le bon fonctionnement du véhicule automobile.

On pourrait également prévoir de supprimer le générateur d'effort de freinage proportionnel au freinage souhaité, par exemple un moteur électrique ou un fluide hydraulique sous pression, d'assurer le « léchage » permanent du disque par au moins une plaquette et de réguler le niveau de décélération uniquement à l'aide du moyen amplificateur 22.

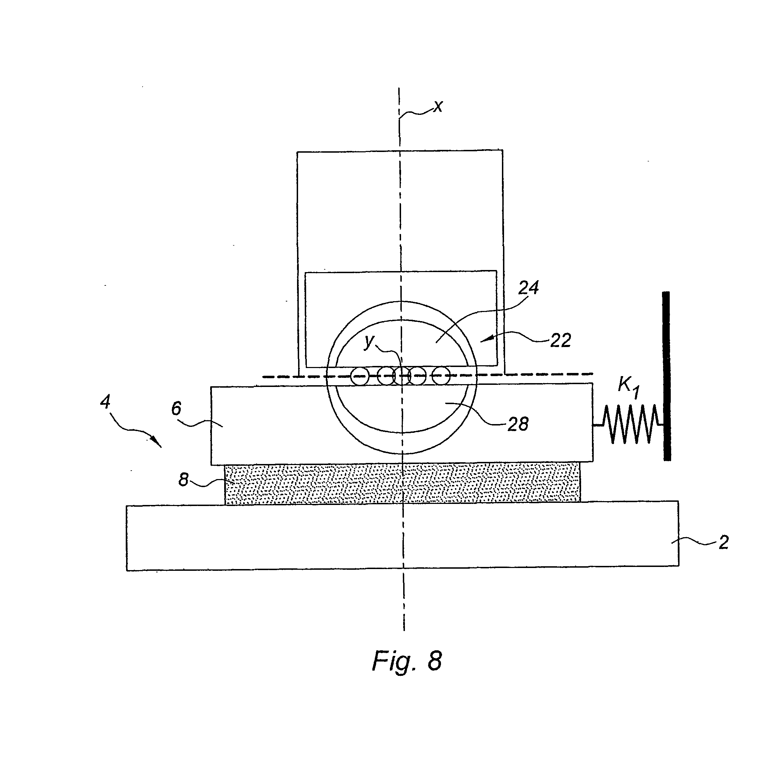

Sur la figure 8, on peut voir un détail d'un quatrième mode de réalisation du dispositif de freinage selon la présente invention comportant un moyen amplificateur 22 formant le générateur GN d'effort de freinage EF et l'amplificateur dudit effort de freinage.

Les première et seconde parties 24,28 sont de forme permettant lors de leur rotation de permettre le rapprochement de la plaquette 4 du disque de frein 2.

Par exemple, le premier et le second demi cylindres (respectivement la première et la seconde demi sphères) forment un excentrique d'axe Y' différent de l'axe Y disposé dans un logement de section sensiblement circulaire, le logement étant formé par une première cavité demi cylindrique (respectivement demi sphérique) porté par un élément fixe par rapport à la plaquette de frein et par une seconde cavité demi cylindrique (respectivement demi sphérique) pratiqué directement dans le support rigide 6 de la plaquette ou dans un élément solidaire de la dite plaquette mais cependant susceptible d'être désolidarisé de la plaquette lors d'un changement de la plaquette de frein.

Il est également envisageable que l'ensemble formé par la première et la seconde parties 24,28 soit de forme sensiblement ellipsoïdale en rotation autour de l'axe Y ou de l'axe Y' de manière à former également un excentrique tel que représenté sur la figure 8.

Ainsi par exemple lorsqu'une détection d'une action de freinage est transmise au calculateur celui-ci donne l'ordre au moteur M1 de déplacer en rotation l'excentrique, ce qui a pour effet d'écarter la plaquette de l'élément fixe et ainsi d'appliquer la plaquette 4 contre le disque de frein 2 et également d'amplifier l'effort de freinage exercé par l'excentrique sur la plaquette par effet coin.

Ce mode de réalisation particulier a pour avantage d'être particulièrement peu encombrant.

On peut également envisager un dispositif de freinage selon la présente invention permettant d'être utiliser comme frein de parc comportant des moyens pour appliquer un effort de freinage en continu lorsque le véhicule est à l'arrêt suivant la législation régissant les freins de parc, par exemple un dispositif « Ball in Ramp » (BIR) appliquant lors d'une traction sur des câbles reliés au dispositif BIR par exemple à l'aide d'un levier de frein de parc disposé à l'intérieur de l'habitacle du véhicule un effort de freinage sur le piston de manière à appliquer la plaquette sur le disque de frein. Le système commandant le moyen amplificateur 22 comporte des moyens de détection de la pente sur laquelle on souhaite immobiliser le véhicule automobile.
Lors d'une activation du frein de parc, les plaquettes sont appliquées contre le disque de frein, les moyens de détection détectent l'orientation de la pente. Sur un sol sensiblement horizontal, le calculateur génère l'ordre au moteur M2 si nécessaire d'amplifier l'effort de freinage exercé par les moyens de frein de parc.

Sur un sol incliné, le calculateur génère l'ordre au moteur d'orienter le plan S dans le sens de la pente ainsi l'effort de freinage sera amplifié, puisque la plaquette subissant un couple de la part du disque de frein dans le sens de la pente par apparition de l'effet de coin.

Cependant il faudra tenir compte du fait qu'il y a un léger roulement relatif entre les deux demi cylindres (respectivement les deux demi sphères) lors de l'actionnement du moyen amplificateur 22 et donc que la position d'arrêt sera modifié de la valeur du roulement au sein du moyen amplificateur 22.

La présente invention a pour avantage de permettre d'employer des générateurs d'effort de freinage de plus faible de puissance, puisque celle-ci est amplifiée par le moyen amplificateur 22, ce qui est particulièrement intéressant dans le cadre de dispositifs électriques de freinage.

Le moteur employé pour faire tourner les demi sphères ou demi cylindres doit permettre leur rotation rapide afin d'adapter l'angle α à la situation de freinage et également de permettre le désengagement de la plaquette de frein lorsque l'amplification fournie par le moyen amplificateur 22 n'est plus souhaitée.

Il est bien entendu prévu que toutes les mesures de paramètres de freinage sont effectuées à des intervalles de temps prédéterminés et avantageusement réguliers permettant une exécution des diagrammes sensiblement en continu si cela se révèle nécessaire.

On a bien réalisé un dispositif de freinage comportant un moyen d'amplification de l'effort de freinage fourni par un générateur, l'amplification étant maîtrisée et continûment variable.

La présente invention s'applique notamment à l'industrie automobile.

La présente invention s'applique notamment à l'industrie du freinage pour véhicule automobile et notamment à l'industrie du freinage pour voiture particulière.

## Revendications

1. Dispositif de freinage pour véhicule automobile comportant un premier élément (4) de friction susceptible de venir s'appliquer par une première face (9) sur une première face (11) d'un second élément (2) solidaire d'une roue du véhicule automobile afin de ralentir celui-ci, un troisième élément (12) d'application d'un effort de freinage en appui par une première extrémité (18) sur une seconde face du premier élément de friction opposée la première face (9) du premier élément de friction (4) et susceptible d'appliquer le premier élément de friction (4) sur le second élément (2) **caractérisé en ce que** le dispositif comporte également un moyen amplificateur (22) pivotant (pour modifier l'inclinaison d'un plan inclinable (S) contenant l'appui entre le premier (4) élément de friction et le troisième élément (12) d'application relativement à un plan (Q) contenant la première face (11) du second élément (2).

2. Dispositif de freinage selon la revendication 1 **caractérisé en ce que** le moyen amplificateur (22) permet de modifier continûment l'inclinaison du plan (S) contenant l'appui entre le premier élément de friction (4) et le troisième élément d'application (12) relativement au plan (Q) contenant la première face (11) du second élément (2).

3. Dispositif selon la revendication 1 ou 2 **caractérisé en ce que** le premier moyen est une plaquette de frein comportant un support rigide (6) portant la seconde face et une garniture (8) muni de la première face (9) susceptible de venir en contact avec une première face (11) du disque de frein et **en ce que** le troisième élément (12) comporte un piston (13) muni de la première face (18) en contact avec la seconde face du support rigide par l'intermédiaire du moyen amplificateur (22) et un générateur (GN) susceptible d'appliquer un effort de freinage (EF) au piston.

4. Dispositif selon la revendication précédente **caractérisé en ce que** le générateur (GN) d'effort de freinage est un maître-cylindre.

5. Dispositif selon la revendication 3 **caractérisé en ce que** le générateur (GN) d'effort de freinage est un moteur électrique (M1).

6. Dispositif selon la revendication 3 **caractérisé en ce que** le générateur (GN) d'effort de freinage est une pompe hydraulique.

7. Dispositif selon l'une quelconque des revendications de 1 à 6 **caractérisé en ce que** le moyen amplificateur (22) comporte une première pièce (24,24') mobile en rotation le piston (13) du côté de la première extrémité (18) du piston (13), une seconde pièce (28,28') mobile en rotation dans le premier élément de friction (4) du côté de la seconde face du premier élément de friction, **en ce que** la première et la seconde pièces (24,24',28,28') sont en appui respectivement par une première et une seconde faces planes (32,34), lesdites faces (32,34) étant parallèles au plan (S) inclinable.

8. Dispositif selon la revendication 7 **caractérisé en ce que** la première pièce (24) a sensiblement la forme d'un demi cylindre disposé dans une cavité demi cylindrique (26) solidaire du piston (13) et **en ce que** la seconde pièce (26) a sensiblement la forme d'un demi cylindre disposé dans une cavité demi cylindrique (30) du premier élément de friction (4).

9. Dispositif selon la revendication 7 **caractérisé en ce que** la première pièce (24') a sensiblement la forme d'une demi sphère disposée dans une cavité demi sphérique (26') solidaire du piston (13) et **en ce que** la seconde pièce (28') a sensiblement la forme d'une demi sphère disposée dans une cavité demi sphérique (30') solidaire du premier élément de friction (4).

10. Dispositif selon l'une quelconque des revendications de 7 à 9 **caractérisé en ce que** le moyen amplificateur (22) comporte également des moyens pour réduire le frottement (35,37,39) entre la première, la seconde pièces (24,24',28,28') et respectivement la première et la seconde cavités (26,26',30,30') et également entre les première et seconde faces (32,34) des première et seconde pièces (24,24',28,28')

11. Dispositif selon la revendication 10 **caractérisé en ce que** les moyens pour réduire (35,37,39) le frottement sont des roulements à billes.

12. Dispositif selon l'une quelconque des revendications précédentes **caractérisé en ce que** le moyen amplificateur (22) est activé par un moteur électrique (M2).

13. Dispositif selon l'une quelconque des revendications précédentes **caractérisé en ce qu'**il comporte également un mécanisme de frein de parc coopérant avec le moyen amplificateur (22) de manière à ce que le plan inclinable (S) soit incliné dans le sens de la pente sur laquelle le véhicule automobile est stationné.

14. Dispositif selon l'une quelconque des revendications précédentes **caractérisé en ce qu'**il comporte un moyen supplémentaire (50) d'application d'un effort de freinage sur le premier élément de friction (4).

15. Dispositif selon la revendication précédente en combinaison avec la revendication 3 **caractérisé en ce que** le moyen supplémentaire (50) est un moyen élastique exerçant un effort sur le piston (13) de manière à appliquer le premier élément de friction sur le second élément (2) en cas de défaillance générateur (GN).

16. Dispositif selon l'une quelconque des revendications précédentes **caractérisé en ce que** le moyen amplificateur (22) permet également l'application du premier élément de friction (4) sur le second élément (2).

17. Dispositif selon la revendication précédente en combinaison avec la revendication 7 **caractérisé en ce que** l'ensemble formé par les première et seconde parties (24,24',28,28') forment un excentrique d'axe de rotation (Y').

18. Dispositif selon la revendication 16 ou 17 en combinaison avec la revendication 7 **caractérisé en ce que** l'ensemble formé par les première et seconde parties (24,24',28,28') a une section transversale sensiblement ellipsoïdale.

19. Système de freinage comportant un calculateur électronique (42), une commande de freinage actionnable par un conducteur, des moyens de détection d'un actionnement de ladite commande de freinage, des moyens de détection de la vitesse d'au moins une roue **caractérisé en ce qu'**il comporte également au moins un dispositif de freinage selon l'une quelconque des revendications précédentes appliqué à ladite roue, le moyen amplificateur (22) étant commandé par le calculateur électronique (42).

20. Système selon la revendication précédente **caractérisé en ce que** le moyen amplificateur (22) du dispositif est activé en cas de détection d'un actionnement de la commande de freinage correspondant à un niveau de décélération supérieure à une valeur prédéterminée (Hs).

21. Système selon la revendication 19 **caractérisé en ce que** le moyen amplificateur (22) est actionné pour une valeur de décélération à atteindre supérieure à une valeur prédéterminée (Vs,Vx).

22. Système selon la revendication 19 **caractérisé en ce que** le moyen amplificateur (22) est activé en cas de détection d'une nécessité de décélérer ladite roue.

## Patentansprüche

1. Bremsvorrichtung für ein Kraftfahrzeug mit einem ersten Reibelement (4), das mit einer ersten Fläche (9) an einer ersten Fläche (11) eines zweiten Elements (2), welches fest mit einem Rad eines Kraftfahrzeugs verbunden ist, in Anlage gelangen kann, um dieses zu verlangsamen, einem dritten Element (12) zum Aufbringen einer Bremskraft, das mit einem ersten Ende (18) an einer zweiten, der ersten Fläche (9) des ersten Reibelements (4) entgegengesetzten Fläche des ersten Reibelements anliegt und das erste Reibelement (4) an das zweite Element (2) anlegen kann, **dadurch gekennzeichnet, dass** die Vorrichtung auch ein schwenkbares, verstärkendes Mittel (22) aufweist, um die Neigung einer neigbaren Ebene (S), in welcher das erste Reibelement (4) und das dritte Anlageelement (12) aneinander anliegen, in Bezug auf eine Ebene (Q), welche die erste Fläche (11) des zweiten Elements (2) enthält, zu verändern.

2. Bremsvorrichtung nach Anspruch 1, **dadurch gekennzeichnet, dass** es mit dem verstärkenden Mittel (22) möglich ist, die Neigung der Ebene (S), in welcher das erste Reibelement (4) und das dritte Anlageelement (12) aneinander anliegen, in Bezug auf die Ebene (Q), welche die erste Fläche (11) des zweiten Elements (2) enthält, kontinuierlich zu verändern.

3. Vorrichtung nach Anspruch 1 oder 2, **dadurch gekennzeichnet, dass** das erste Mittel ein Bremsklotz ist, der einen starren Träger (6) aufweist, welcher die zweite Fläche und einen Bremsbelag (8) trägt, der mit der ersten Fläche (9) versehen ist, welche mit einer ersten Fläche (11) der Bremsscheibe in Berührung gelangen kann, und dass das dritte Element (12) einen Kolben (13) aufweist, der mit der ersten Fläche (18) versehen ist, welche über das verstärkende Mittel (22) die zweite Fläche des starren Trägers berührt, sowie einen Generator (GN), der eine Bremskraft (EF) auf den Kolben aufbringen kann.

4. Vorrichtung nach dem vorhergehenden Anspruch, **dadurch gekennzeichnet, dass** der Bremskraftgenerator (GN) ein Hauptzylinder ist.

5. Vorrichtung nach Anspruch 3, **dadurch gekennzeichnet, dass** der Bremskraftgenerator (GN) ein Elektromotor (M1) ist.

6. Vorrichtung nach Anspruch 3, **dadurch gekennzeichnet, dass** der Bremskraftgenerator (GN) eine hydraulische Pumpe ist.

7. Vorrichtung nach einem der Ansprüche 1 bis 6, **dadurch gekennzeichnet, dass** das verstärkende Mittel (22) ein erstes Teil (24, 24') aufweist, das im Kolben (13) auf der Seite des ersten Endes (18) des Kolbens (13) drehbar ist, ein zweites Teil (28, 28'), das im ersten Reibelement (4) auf der Seite der zweiten Fläche des ersten Reibelements drehbar ist, und dass das erste und zweite Teil (24, 24', 28, 28') über eine erste bzw. zweite ebene Fläche (32, 34) in Anlage sind, wobei die Flächen (32, 34) parallel zur neigbaren Ebene (S) sind.

8. Vorrichtung nach Anspruch 7, **dadurch gekennzeichnet, dass** das erste Teil (24) im Wesentlichen die Form eines Halbzylinders besitzt, der in einem halbzylindrischen Hohlraum (26) angeordnet ist, welcher fest mit dem Kolben (13) verbunden ist, und dass das zweite Teil (28) im Wesentlichen die Form eines Halbzylinders besitzt, der in einem halbzylindrischen Hohlraum (30) des ersten Reibelements (4) angeordnet ist.

9. Vorrichtung nach Anspruch 7, **dadurch gekennzeichnet, dass** das erste Teil (24') im Wesentlichen die Form einer Halbkugel besitzt, die in einem halbkugelförmigen Hohlraum (26') angeordnet ist, der fest mit dem Kolben (13) verbunden ist, und dass das zweite Teil (28') im Wesentlichen die Form einer Halbkugel besitzt, die in einem halbkugelförmigen Hohlraum (30') angeordnet ist, der fest mit dem ersten Reibelement (4) verbunden ist.

10. Vorrichtung nach einem der Ansprüche 7 bis 9, **dadurch gekennzeichnet, dass** das verstärkende Mittel (22) auch Mittel (35, 37, 39) zur Verringerung der Reibung zwischen dem ersten bzw. zweiten Teil (24, 24', 28, 28') und dem ersten bzw. zweiten Hohlraum (26, 26', 30, 30') sowie zwischen der ersten und zweiten Fläche (32, 34) des ersten bzw. zweiten Teils (24, 24', 28, 28') aufweist.

11. Vorrichtung nach Anspruch 10, **dadurch gekennzeichnet, dass** die Mittel (35, 37, 39) zur Verringerung der Reibung Kugellager sind.

12. Vorrichtung nach einem der vorhergehenden Ansprüche, **dadurch gekennzeichnet, dass** das verstärkende Mittel (22) durch einen Elektromotor (M2) betätigt wird.

13. Vorrichtung nach einem der vorhergehenden Ansprüche, **dadurch gekennzeichnet, dass** sie auch einen Handbremsmechanismus aufweist, der mit dem verstärkenden Mittel (22) so zusammenwirkt, dass die neigbare Ebene (S) in Richtung des Gefälles, auf dem das Kraftfahrzeug geparkt ist, geneigt wird.

14. Vorrichtung nach einem der vorhergehenden Ansprüche, **dadurch gekennzeichnet, dass** sie ein zusätzliches Mittel (50) zum Aufbringen einer Bremskraft auf das erste Reibelement (4) aufweist.

15. Vorrichtung nach dem vorhergehenden Anspruch in Kombination mit Anspruch 3, **dadurch gekennzeichnet, dass** das zusätzliche Mittel (50) ein elastisches Mittel ist, das eine Kraft auf den Kolben (13) so aufbringt, dass das erste Reibelement an das zweite Element (2) angelegt wird, wenn der Generator (GN) ausfällt.

16. Vorrichtung nach einem der vorhergehenden Ansprüche, **dadurch gekennzeichnet, dass** es mit dem verstärkenden Mittel (22) auch möglich ist, das erste Reibelement (4) an das zweite Element (2) anzulegen.

17. Vorrichtung nach dem vorhergehenden Anspruch in Kombination mit Anspruch 7, **dadurch gekennzeichnet, dass** die durch das erste und zweite Teil (24, 24', 28, 28') gebildete Baugruppe einen Exzenter mit der Drehachse (Y') bildet.

18. Vorrichtung nach Anspruch 16 oder 17 in Kombination mit Anspruch 7, **dadurch gekennzeichnet, dass** die durch das erste und zweite Teil (24, 24', 28, 28') gebildete Baugruppe einen im Wesentlichen ellipsoidischen Querschnitt aufweist.

19. Bremssystem mit einem elektronischen Rechner (42), einer Bremssteuerung, die durch einen Fahrer betätigt werden kann, Mitteln zur Erfassung der Betätigung der Bremssteuerung, Mitteln zur Erfassung der Geschwindigkeit mindestens eines Rads, **dadurch gekennzeichnet, dass** es auch mindestens eine Bremsvorrichtung nach einem der vorhergehenden Ansprüche aufweist, die bei dem Rad verwendet wird, wobei das verstärkende Mittel (22) durch den elektronischen Rechner (42) gesteuert wird.

20. System nach dem vorhergehenden Anspruch, **dadurch gekennzeichnet, dass** das verstärkende Mittel (22) der Vorrichtung bei der Erfassung einer Betätigung der Bremssteuerung aktiviert wird, die einem Verzögerungsgrad entspricht, der höher ist als ein vorbestimmter Wert (Hs).

21. Vorrichtung nach Anspruch 19, **dadurch gekennzeichnet, dass** das verstärkende Mittel (22) aktiviert wird, um einen Verzögerungswert zu erhalten, der höher ist als ein vorbestimmter Wert (Vs, Vx).

22. Vorrichtung nach Anspruch 19, **dadurch gekennzeichnet, dass** das verstärkende Mittel (22) bei der Erfassung der Notwendigkeit, das Rad zu verzögern, aktiviert wird.

## Claims

1. A brake device for a motor vehicle, the brake device including a friction first element (4) suitable for having a first face (9) pressed against a first face (11) of a second element (2) which is secured to a wheel of the motor vehicle in order to slow said vehicle down, and an application third element (12) for applying a braking force bearing via a first end (18) against a second face of the friction first element that is opposite from the first face (9) of the friction first element (4) and suitable for pressing the friction first element (4) against the second element (2), said brake device being **characterized in that** it also includes amplifier means (22) pivoting for modifying the inclination of a tiltable plane (S) containing the bearing surface between the friction first element (4) and the application third element (12) relative to a plane (Q) containing the first face (11) of the second element (2).

2. A brake device according to claim 1, **characterized in that** the amplifier means (22) make it possible for the inclination of the plane (S) containing the bearing surface between the friction first element (4) and the application third element (12) to be modified continuously relative to the plane (Q) containing the first face (11) of the second element (2).

3. A brake device according to claim 1 or claim 2, **characterized in that** the first means are constituted by a brake pad having a rigid support (6) carrying the second face and a lining (8) provided with the first face (9) suitable for coming into contact with a first face (11) of the brake disk, and **in that** the third element (12) includes a piston (13) provided with the first face (18) in contact with the second face of the rigid support via the amplifier means (22) and a braking force generator (GN) suitable for applying a braking force (EF) to the piston.

4. A device according to the preceding claim, **characterized in that** the braking force generator (GN) is a master cylinder.

5. A device according to claim 3, **characterized in that** the braking force generator (GN) is an electric motor (M1).

6. A device according to claim 3, **characterized in that** the braking force generator (GN) is a hydraulic pump.

7. A device according to any one of claims 1 to 6, **characterized in that** the amplifier means (22) comprise a first part (24, 24') that is mounted to pivot in the piston (13), in the first end (18) of said piston (13), and a second part (28, 28') mounted to pivot in the friction first element (4), in the second face of the friction first element, and **in that** the first and second parts (24, 24', 28, 28') are in mutual abutment respectively via first and second plane faces (32, 34), said faces (32, 34) being parallel to the tiltable plane (S).

8. A device according to claim 7, **characterized in that** the first part (24) is substantially in the shape of a half-cylinder disposed in a semi-cylindrical cavity (26) integral with the piston (13) and **in that** the second part (26) has substantially the shape of a half-cylinder disposed in a semi-cylindrical cavity (30) in the friction first element (4).

9. A device according to claim 7, **characterized in that** the first part (24') is substantially in the shape of a half-sphere disposed in a hemispherical cavity (26') integral with the piston (13), and **in that** the second part (28') is substantially in the shape of a half-sphere disposed in a hemispherical cavity (30') integral with the friction first element (4).

10. A device according to any one of claims 7 to 9, **characterized in that** the amplifier means (22) further comprise friction-reducing means (35, 37, 39) for reducing the friction between respective ones of the first and second parts (24, 24', 28, 28') and respective ones of the first and second cavities (26, 26', 30, 30'), and also between the first and second faces (32, 34) of the first and second parts (24, 24', 28, 28').

11. A device according to claim 10, **characterized in that** the friction-reducing means (35, 37, 39) are ball bearings.

12. A device according to any preceding claim, **characterized in that** the amplifier means (22) are activated by an electric motor (M2).

13. A device according to any preceding claim, **characterized in that** it also includes a parking brake mechanism cooperating with the amplifier means (22) so that the tiltable plane (S) is tilted in the same direction as the gradient on which the motor vehicle is parked.

14. A device according to any preceding claim, **characterized in that** it includes additional means (50) for applying a braking force against the friction first element (4).

15. A device according to the preceding claim in combination with claim 3, **characterized in that** the additional means (50) are resilient means exerting a force on the piston (13) so as to press the friction first element against the second element (2) in the event that the generator (GN) fails.

16. A device according amplifier any preceding claim, **characterized in that** the amplifier means (22) also make it possible to press the friction first element (4) against the second element (2).

17. A device according to the preceding claim in combination with claim 7, **characterized in that** the assembly formed by the first and second portions (24, 24', 28, 28') form a cam having a pivot axis (Y').

18. A device according to claim 16 or claim 17 in combination with the claim 7, **characterized in that** the assembly formed by the first and second portions (24, 24', 28, 28') has a cross-section that is substantially ellipsoidal.

19. A brake system including an electronic computer (42), a brake control suitable for being actuated by a driver, detection means for detecting when. said brake control is actuated, and detection means for detecting the speed of at least one wheel, said brake system being **characterized in that** it also includes at least one brake device according to any preceding claim, applied to said wheel, the amplifier means (22) being controlled by the electronic computer (42).

20. A brake system according to the preceding claim, **characterized in that** the amplifier means (22) of the device are activated when actuation of the brake control is detected that corresponds to a level of deceleration greater than a predetermined value (Hs).

21. A system according to claim 19, **characterized in that** the amplifier means (22) are actuated for a deceleration value to be reached that is greater than a predetermined value (Vs, Vx).

22. A system according to claim 19, **characterized in that** the amplifier means (22). are activated in the event that a necessity to decelerate said wheel is detected.
